# EUROPÄISCHE PATENTANMELDUNG

(11) **EP 1 217 340 A2**
(43) Veröffentlichungstag der Anmeldung: **26.06.2002**
(21) Anmeldenummer: 01120847.7
(22) Anmeldetag: 30.08.2001
(51) Int. Cl.: G01F 23/00

(54) **Festkörpersammelbehälter**

(30) Priorität: 22.12.2000 DE 10064159
(71) Anmelder: Het-Anke Filtertechnik GmbH, 63674 Altenstadt (DE)
(72) Erfinder: Hoenigs, Michael, 61231 Bad Nauheim (DE)
(74) Vertreter: Müller-Wolff, Thomas, Dipl.-Ing.

(57) **Zusammenfassung**

Die Erfindung betrifft einen Festkörpersammelbehälter mit Füllstandsanzeige für körnige, insbesondere staubförmige Partikel, die aus einem Fluid abgeschieden und in einem Behälter gesammelt werden, wobei nach Erreichen eines vorbestimmbaren Füllstandes der Behälter entleert wird. Oberhalb des Behälterbodens ist eine in Schwerkraftrichtung bewegliche oder elastische Druckaufnahmeeinheit angeordnet, auf der die abgeschiedenen Partikel gesammelt werden. Die Druckaufnahmeeinheit ist mit einem Füllstandsmeldegerät verbunden.

## Beschreibung

Die Erfindung betrifft einen Festkörpersammelbehälter mit Füllstandsanzeige für körnige, insbesondere staubförmige Partikel, die aus einem Fluid abgeschieden und in einem Behälter gesammelt werden wobei nach Erreichen eines vorbestimmbaren Füllstandes der Behälter entleert wird.

Derartige Festkörpersammelbehälter mit Füllstandsanzeigen werden beispielsweise an Feinstaubfiltern eingesetzt, die regelmäßig entleert werden müßen. Hierfür befindet sich unterhalb der Filtereinrichtung ein mit diesem lösbar verbundener Behälter, in den die körnigen oder staubförmigen Partikel nach dem Abklopfen hineinfallen oder mittels Unterdruck eingesaugt werden. Zur Kontrolle des Füllstandes muß der Behälter geöffnet werden. Er kann auch von dem Filtergerät gelöst und getrennt von ihm gewogen werden. Beide Methoden sind umständlich und zeitraubend. Außerdem muß, um die Menge des abgeschiedenen Staubs zu ermitteln, die Filteranlage für die Füllstandskontrolle abgeschaltet werden.

Aufgabe der vorliegenden Erfindung ist es, einen Festkörperabscheidebehälter mit Füllstandsüberwachung derart zu verbessern, daß die Messungen während des Betriebes mit großer Genauigkeit durchgeführt werden können. Die Messungen sollen außerdem bei wechselnden Druckverhältnissen und unter Schwingungsbelastung durchführbar sein und genaue Anzeigewerte liefern.

Diese Aufgabe wird erfindungsgemäß durch die in den Patentansprüchen angegebenen Merkmalen gelöst. Es hat sich gezeigt, daß der erfindungsgemäße Festkörpersammelbehälter mit Füllstandsmeldevorrichtung für ganz unterschiedliche Partikel- und Behälterformen geeignet ist. Die konstruktive Ausführung kann an verschiedene Anwendungsfälle, z.B. an Saug-, Druck- oder elektrostatische Filtersysteme leicht angepasst werden. Durch die Verwendung von bekannten Messwertgebern ist eine einfache und kostengünstige Herstellung möglich. Im folgenden wird die Erfindung anhand mehrerer Ausführungsbeispiele näher erläutert. Es zeigen:
- Figur 1: erfindungsgemäßer Festkörperbehälter mit optischer Füllstandsanzeige,
- Figur 2: erfindungsgemäßer Festkörpersammelbehälter mit induktiver Füllstandsanzeige
- Figur 3: erfindungsgemäßer Festkörpersammelbehälter mit kapazitiver Füllstandsanzeige
- Figur 4: erfindungsgemäßer Festkörpersammelbehälter mit Füllstandsanzeige und Druckmeßdose
- Figur 5: Detailausschnitt einer Variante des erfindungsgemäßen Festkörpersammelbehälters.

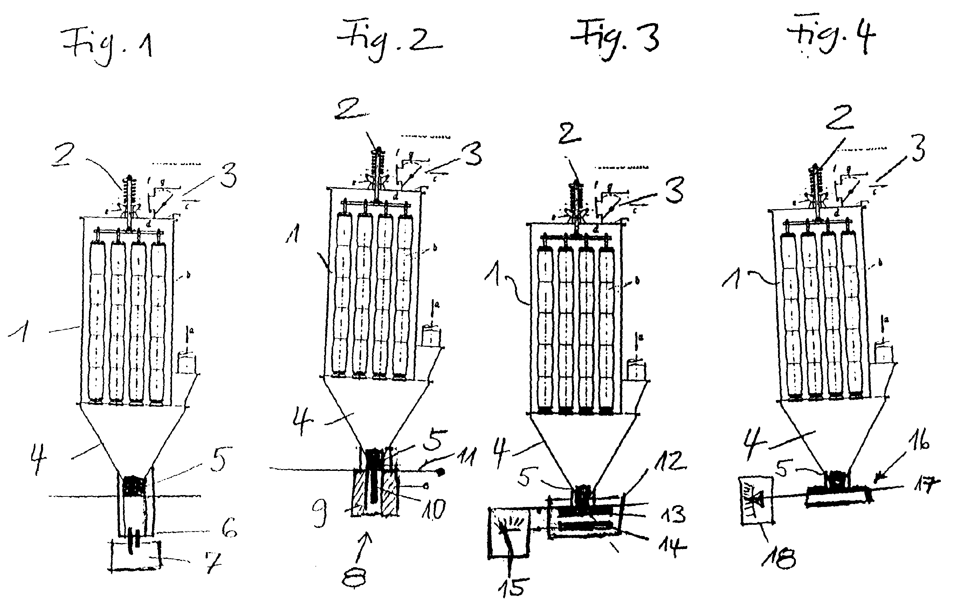

Figur 1 zeigt den prinzipiellen Aufbau eines erfindungsgemäß ausgebildeten Festkörpersammelbehälters mit optischer Füllstandsanzeige. Der Sammelbehälter 1 umfaßt eine Filtereinrichtung, beispielsweise einen Schlauchfilter, eine Abklopfeinrichtung 2 und eine Druckumschaltung 3 für die Entfernung der staubförmigen Partikel aus den Filterschläuchen. Unterhalb des Abscheidebehälters 1 befindet sich ein Sammeltrichter 4, durch den die abgeschiedenen Festkörper beispielsweise die staubförmigen Partikel in den Staubsammelbehälter mit zu einer beweglichen Druckaufnahmeeinheit 5 geführt werden.

Der Abstand der Druckplatte 5 zum Behälterboden 6 hin ist veränderlich und verringert sich je nach Druckbelastung, d.h. mit zunehmendem Gewicht der oberhalb der Druckplatte 5 angesammelten Partikel. Die Füllstandshöhe kann laufend über eine optische Messeinrichtung 7 gemessen werden. Die optische Füllstandsanzeige besteht im Wesentlichen aus einem Infrarot-Meßsystem nach Art des Entfernungsmesser bei Fotokameras. Oder es wird die Druckplatte über Federn oder andere elastische Elemente abgestützt. Wenn sich die Druckplatte durch entsprechende Belastung dem Sensor (Induktiver Melder, pneumatischer Endschalter, eletronischer Endschalter) nähert (durch zusammendrückende Federn) folgt ein Signal (Behälter Voll!)

Die Figuren 2 bis 4 zeigen analog zu Figur 1 den Aufbau des erfindungsgemäß ausgebildeten Festkörpersammelbehälters, wobei jeweils unterschiedliche Meßeinrichtungen unterhalb des Trichters 4 angeordnet sind. Im Falle der Figur 2 handelt es sich um einen induktiven Messwertgeber 8, bestehend aus einem Spulenkörper 9 und einem in dem Spulenkörper 9 beweglichen Metallkern 10, der mit der Druckplatte 5 fest verbunden ist. Somit kann eine Veränderung des Füllstandes durch die Verlagerung der Druckplatte in Form einer dem Schaltkreis 11 induzierten Spannung festgestellt werden.

In Figur 3 ist im Anschluß an den Trichter 4 ein kapazitiv arbeitender Messwertgeber 12 mit beweglichen Kondensatorplatten 13, 14 angeschlossen. Bei einer Höhenveränderung der Druckplatte 5 verändern sich auch die Abstände der Kondensatorplatten 13, 14 so daß sich an dem Anzeigegerät 15 die jeweilige Füllstandshöhe ermitteln lässt.

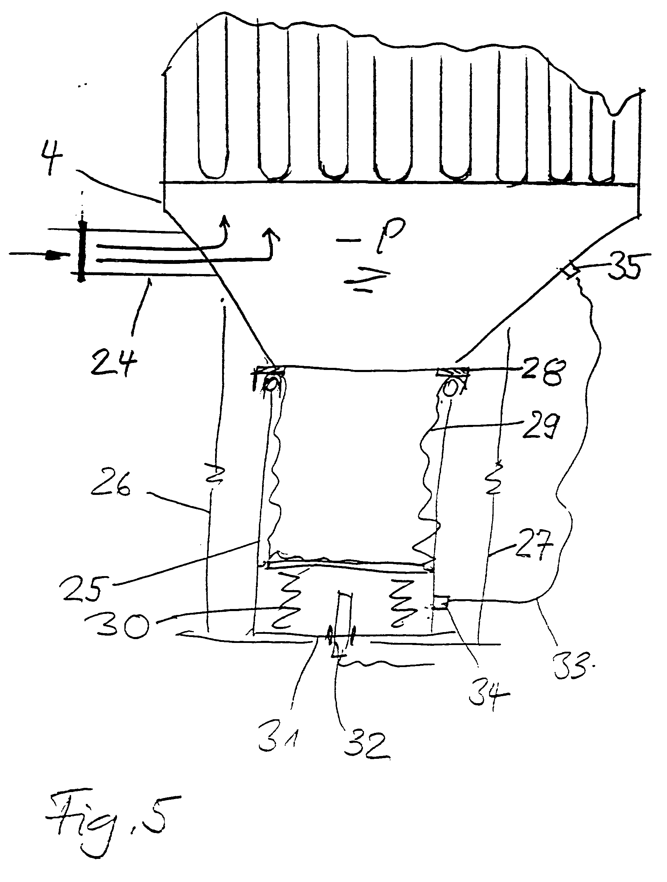

In Figur 4 ist im Anschluß an den Trichter 4 eine Druckmeßdose 16 angeordnet. Eine Membran 17 in der Druckmeßdose 16 ist mit der Druckplatte 5 fest verbunden, so daß bei einer Veränderung des Füllstandes eine entsprechende Veränderung auf der Skala des zugehörigen Meßgerätes 18 erfolgt.

Figur 5 zeigt eine Detailansicht in der Variante des erfindungsgemäßen Festkörpersammelbehälters im unteren Bereich der Filteranlage. An den Sammeltrichter 4 ist ein Einlaßrohr 24 für die staubhaltigen Abgase angeschlossen.

Der Staub fällt durch den Trichter 4 in einen Staubbehälter 25, der über Spannvorrichtungen 26, 27 an dem Trichter 4 angepresst wird. Zwischen dem Staubbehälter 25 und dem Trichter 4 ist eine Dichtung 28 angeordnet mit der auch ein eingelegter Staubsack 29 dichtend gehalten wird.

Der Staubsack 29 liegt auf der Druckplatte 5, die sich über Federn 30 gegen den Staubbehälterboden 31 abstützt. Mit zunehmendem Gewicht der gesammelten Staubpartikel nähert sich die Druckplatte 5 einem Näherungsschalter oder Endschalter 32, der über ein langes Gewinde so eingestellt werden kann, daß nach einem bestimmten Federweg entsprechend einer bestimmten Staubbelastung eine Signalgebung erfolgt.

Da in dem gesamten Festkörpersammelbehälter ein Unterdruck herrscht, ist es zweckmäßig eine Leitung 33 über Anschlüsse 34, 35 mit dem Innenraum der Filteranlage zu verbinden. Damit kann ein Druckausgleich erfolgen, so daß der eingelegte Staubsack 29 nicht in die Filteranlage gesaugt wird.

Aus den vorstehenden Erläuterungen ergibt sich, daß die erfindungsgemäßen Festkörpersammelbehälter mit sehr unterschiedlich arbeitenden Messwertgebern ausgerüstet werden können. Der Aufbau ist sehr einfach und von äußeren Einflüssen unabhängig. Unter wechselnden Druckverhältnissen und selbst bei Schwingungsbelastungen lassen sich geeignete Messwertgeber an dem erfindungsgemäß ausgebildeten Festkörperabscheidebehälter anschließen. Somit ist ein mit dem erfindungsgemäßen Festkörpersammelbehälter ausgerüstetes Filtersystem auch unter extremen Bedingungen funktionstüchtig. Es besteht eine hohe Zuverlässigkeit hinsichtlich der Meßgenauigkeit und der Betriebssicherheit.

## Patentansprüche

1. Festkörpersammelbehälter mit Füllstandsanzeige für körnige, insbesondere staubförmige Partikel, die aus einem Fluid abgeschieden und in einem Behälter gesammelt werden, wobei nach Erreichen eines vorbestimmbaren Füllstandes der Behälter entleert wird,
**dadurch gekennzeichnet,**
**daß** oberhalb des Behälterbodens eine in Schwerkraftrichtung bewegliche oder elastische Druckaufnahmeeinheit (5) angeordnet ist, auf der die abgeschiedenen Partikel gesammelt werden und daß die Druckaufnahmeeinheit (5) mit einem Füllstandsmeldegerät verbunden ist.

2. Festkörpersammelbehälter mit Füllstandsanzeige nach Anspruch 1,
**dadurch gekennzeichnet,**
**daß** bei einem bestimmten Gewicht oder Füllstand ein akustisches oder visuelles Signal abgegeben wird.

3. Festkörpersammelbehälter mit Füllstandsanzeige nach Anspruch 1,
**dadurch gekennzeichnet,**
**daß** die elastische Druckaufnahmeeinheit (5) aus einem Membranträger besteht.

4. Festkörpersammelbehälter mit Füllstandsanzeige nach Anspruch 1,
**dadurch gekennzeichnet,**
**daß** die Druckaufnahmeeinheit (5) aus einer Druckplatte besteht.

5. Festkörpersammelbebehälter mit Füllstandsanzeige nach einem der vorhergehenden Ansprüche,
**dadurch gekennzeichnet,**
**daß** das Füllstandsmeldegerät aus einem eine Höhenveränderung kontinuierlich feststellenden Meßgerät besteht.

6. Festkörpersammelbehälter mit Füllstandsanzeige nach einem der vorhergehenden Ansprüche,
**dadurch gekennzeichnet,**
**daß** das die Höhenveränderung erfassende Meßgerät eine Druckmeßdose ist.

7. Festkörpersammelbehälter mit Füllstandsanzeige nach einem der vorhergehenden Ansprüche,
**dadurch gekennzeichnet,**
**daß** in dem Abscheidebehälter zunächst eine elastische Einlage, ein Sack oder Kunststoffbeutel eingelegt ist, dessen unterer Teil auf der Druckaufnahmeeinheit (5) lose aufliegt und daß die Länge des elastischen Beutels größer ist, als der Abstand zwischen Druckaufnahmeinheit (5) und Behälterbodenden.

8. Festkörpersammelbehälter mit Füllstandsanzeige nach einem der vorhergehenden Ansprüche,
**dadurch gekennzeichnet,**
**daß** der Sammelbehälter über eine luftdichte Abdichtung mit einem Trichter (4) verbunden ist, der unterhalb einer Filtereinheit (5) angebracht ist, wobei eine Leitung das Innere des Trichters mit dem Raum unterhalb der Druckaufnahmeeinheit (5) verbindet, um einen Druckausgleich zu schaffen.

9. Festkörpersammelbehälter mit Füllstandsanzeige nach einem der vorhergehenden Ansprüche,
**dadurch gekennzeichnet,**
**daß** die Abdichtung der Druckaufnahmeeinheit (5) über eine Sperrflüssigkeit erfolgt.
